# EUROPEAN PATENT APPLICATION

(11) **EP 4 531 154 A1**
(43) Date of publication of application: **02.04.2025**
(21) Application number: 24202577.3
(22) Date of filing: 25.09.2024
(51) Int. Cl.: H01M 10/0525, H01M 10/0585, H01M 50/105, H01M 50/55, H01M 50/557, H01M 50/586, H01M 50/591, H01M 50/595

(54) **SECONDARY BATTERY AND MANUFACTURING METHOD THEREFOR, AND ELECTRONIC APPARATUS**

(30) Priority: 28.09.2023 CN 202311272110
(71) Applicant: Ningde Amperex Technology Ltd., Ningde City, Fujian 352100 (CN)
(72) Inventor: YANG, Dongzi, Ningde City, Fujian 352100 (CN); CHEN, Jia, Ningde City, Fujian 352100 (CN); WANG, Jianming, Ningde City, Fujian 352100 (CN)
(74) Representative: Icosa

(57) **Abstract**

An second battery includes a housing(10), an electrode assembly(20) and electrolyte which are accommodated in the housing(10), tabs(30) connected to the electrode assembly(20), and a first thin film(40). The electrode assembly(20) includes a first end face(201) and a side surface(203) surrounding the periphery of the first end face(201). The tabs(30) protrude from the first end face(201) in a first direction. The first thin film(40) includes a main body portion and a first extending portion(42) which are connected, where the first main body portion(41) surrounds the side surface(203), and the first extending portion(42) covers at least part of the first end face(201).

## Description

### TECHNICAL FIELD

This application relates to the technical field of batteries, and in particular to a secondary battery and a manufacturing method therefor, and an electronic apparatus.

### BACKGROUND

A secondary battery is widely applied to electric vehicles and consumer electronic products due to the advantages of high energy density, high output power, long cycle life and the like. However, the safety problems such as fire may occur when the secondary battery is dropped or collided.

### SUMMARY

An objective of this application is to provide a secondary battery capable of reducing the risk of internal short circuit.

A first aspect of this application provides a second battery, including a housing, an electrode assembly and electrolyte which are accommodated in the housing, tabs connected to the electrode assembly, and a first thin film. The electrode assembly includes a first end face and a side surface surrounding the periphery of the first end face. The tabs protrude from the first end face in a first direction. The first thin film includes a main body portion and a first extending portion which are connected, where the first main body portion surrounds the side surface, and the first extending portion covers at least part of the first end face.

According to the secondary battery provided by this application, the first thin film surrounding the side surface of the electrode assembly and covering the first end face of the electrode assembly is configured, and the electrolyte impacting the first end face is blocked by the first thin film, so that the risk of contact short circuit of a first electrode plate and a second electrode plate due to the contraction of a separator film exposed on the first end face caused by the impact of the electrolyte can be reduced.

According to some embodiments of this application, in a second direction perpendicular to the first direction, the thickness of the battery assembly is T mm, and the length of the first extending portion is L mm, wherein 0<L≤0.5T+2. When L is in the above range, the risk of the first extending portion entering a packaging portion can be reduced, thereby reducing the influence on the sealing property of the housing and also reducing the influence on the energy density caused by excessive L.

According to some embodiments of this application, 2≤L≤0.5T+2.

According to some embodiments of this application, the elongation at break of the first thin film is greater than or equal to 1%.

According to some embodiments of this application, the gas permeability of the first thin film is less than 10000s/100cc. When the gas permeability of the first thin film is in the above range, the impact of the electrolyte can be blocked without affecting the infiltration of the electrolyte.

According to some embodiments of this application, the first thin film includes a substrate layer; the substrate layer includes a polymer film, a multi-layer polymer film or a nonwoven fabric formed by a polymer; and the polymer includes at least one of polyolefin, polyvinylidene fluoride, polyethylene terephthalate, cellulose, polyimide, polyamide, spandex or polyphenylenediamine.

According to some embodiments of this application, the first thin film further includes a bonding layer arranged on a surface of the substrate layer, and the bonding layer is bonded with the electrode assembly, so that the stability between the first thin film and the electrode assembly can be improved.

According to some embodiments of this application, the thickness of the first thin film is H, and 0<H≤50µm, thereby facilitating the reduction of the influence on the volume energy density.

According to some embodiments of this application, 4µm<H≤10µm.

According to some embodiments of this application, the side surface includes a first side surface and a second side surface which are opposite to each other in a third direction perpendicular to the first direction; the first thin film includes a start end and a tail end which protrude from the first side surface or the second side surface; and the start end and the tail end are overlapped and bonded to form a composite portion. The composite portion is arranged on the first side surface or the second side surface, so that the first thin film is arranged on the surface of the electrode assembly in a stretching manner, and the processing process is simplified.

According to some embodiments of this application, the electrode assembly further includes a second end face opposite to the first end face in the first direction; the secondary battery further includes a second thin film; the second thin film includes a second main body portion and a second extending portion which are connected; the second main body portion surrounds the side surface, and the second extending portion covers at least part of the second end face, so that the electrolyte impact on the second end face can be blocked, and risk of contact short circuit of a first electrode plate and a second electrode plate due to the contraction of a separator film exposed on the first end face caused by the impact of the electrolyte can be reduced.

According to some embodiments of this application, in the first direction, the first main body portion and the second main body portion are connected.

According to some embodiments of this application, the electrode assembly is of a stacked structure.

According to some embodiments of this application, in the first direction, the orthographic projection area of the first extending portion on the first end face is S1 mm², and the orthographic projection area of the first end face is S2 mm², 0<S1 <S2.

According to some embodiments of this application, 20%≤S1/S2<100%. According to some embodiments of this application, 20%≤S1/S2≤80%.

A second aspect of this application provides a manufacturing method for a secondary battery, including the following steps:
preparing an electrode assembly, where the electrode assembly includes a first end face and a side surface surrounding the periphery of the first end face;
connecting the electrode assembly and tabs, where the tabs protrude from the first end face in a first direction;
placing the electrode assembly on a first thin film, where in the first direction, the first thin film includes a main body portion and a first extending portion connected to the first main body portion, and in a third direction perpendicular to the first direction, the first thin film includes a start end and a tail end which are arranged oppositely;
bending the first thin film, so that the first main body portion surrounds the side surface, and the start end and the tail end are located on the same side of the electrode assembly in the third direction;
stretching the first thin film in the third direction, so that the first extending portion is bent toward the first end face and covers a part of the first end face;
connecting the start end and the tail end, so that the first main body portion fastens the electrode assembly; and
placing the electrode assembly in a housing, and injecting electrolyte in the housing.

A third aspect of this application provides a manufacturing method for a secondary battery, including the following steps:
preparing an electrode assembly, where the electrode assembly includes a first end face and a side surface surrounding the periphery of the first end face;
connecting the electrode assembly and tabs, where the tabs protrude from the first end face in a first direction;
sleeving a first thin film on the electrode assembly, where the first thin film includes a first main body portion and a first extending portion connected to the main body portion, and the main body portion surrounds the side surface;
heating the first thin film, so that the first extending portion is contracted to cover a part of the first end face; and
placing the electrode assembly in a housing, and injecting electrolyte in the housing.

A fourth aspect of this application provides an electronic apparatus, including any of the above secondary batteries, or a secondary battery manufactured by any of the above manufacturing methods for the secondary batteries.

### BRIEF DESCRIPTION OF THE DRAWINGS

FIG. 1 is a view of a secondary battery according to an embodiment of this application viewed in a second direction;
FIG. 2 is a view of an electrode assembly according to an embodiment of this application viewed in a second direction;
FIG. 3 is a sectional view of the electrode assembly shown in FIG. 2 along III-III;
FIG. 4 is a sectional view of the electrode assembly shown in FIG. 1 along IV-IV;
FIG. 5 is a sectional view of the electrode assembly shown in FIG. 3 along V-V;
FIG. 6 is a view of an electrode assembly according to another embodiment of this application viewed in a second direction; and
FIG. 7 is a schematic sectional view of the electrode assembly shown in FIG. 6 along VII-VII.

**Reference numeral description of main elements**

| | |
|---|---|
| Secondary battery | 100 |
| Housing | 10 |
| Electrode assembly | 20 |
| Tab | 30 |
| Main body portion | 11 |
| Packaging portion | 12 |
| Positive electrode plate | 21 |
| Negative electrode plate | 22 |
| Separator film | 23 |
| First current collector | 211 |
| First active substance layer | 212 |
| Second current collector | 221 |
| Second active substance layer | 222 |
| First end surface | 201 |
| Second end surface | 202 |
| Side surface | 203 |
| First thin film | 40 |
| First main body portion | 41 |
| First extending portion | 42 |
| First edge | 203a |
| Second edge | 203b |
| Substrate layer | 401 |
| Bonding layer | 402 |
| First side surface | 2031 |
| Second side surface | 2032 |
| Start end | 40a |
| Tail end | 40b |
| Composite portion | 43 |
| Second thin film | 50 |
| Second main body portion | 51 |
| Second extending portion | 52 |
| First direction | X |
| Second direction | Z |
| Third direction | Y |

The following specific embodiments further describe this application with reference to the above drawings.

### DETAILED DESCRIPTION

The technical solutions in the embodiments of this application are clearly described in detail below. Apparently, the described embodiments are some rather than all of the embodiments of this application. Unless otherwise defined, all technical and scientific terms used herein have the same meanings as those commonly understood by those skilled in the technical field of this application. The terms used in the specification of this application are merely for the purpose of describing specific embodiments, and are not intended to limit this application.

The embodiments of this application are described in detail below. However, this application should be embodied in many different forms and should not be construed as limited to the exemplary embodiments described herein. Instead, these exemplary embodiments are provided, so that this application will be conveyed to those skilled in the art thoroughly and in detail.

In addition, for simplicity and clarity, the sizes or thicknesses of various assemblies and layers can be enlarged in the drawings. Throughout the whole specification, the same numerical values refer to the same elements. As used herein, the term "and/or" includes any and all combinations of one or more of associated and listed items. In addition, it should be understood that when an element A is referred to be "connected" with an element B, or an element A and an element B are referred to be connected to each other, the element A may be directly connected to the element B, or an intermediate element C may be present and the element A and the element B may be connected to each other indirectly.

Further, "may" used in the description of the embodiments of this application refers to "one or more embodiments of this application".

The technical terms used herein are for the purpose of describing specific embodiments, and are not intended to limit this application. As used therein, the singular form is intended to include the plural form, unless otherwise specified in the context. It should be further understood that the term "include", when used in the specification, refers to the described features, numerical values, steps, operations, elements and/or components, but do not exclude the presence or addition of one or more of other features, numerical values, operations, elements, components and/or combinations thereof.

It should be understood that although the terms first, second and third may be used herein to describe various elements, components, regions, layers and/or portions, but these elements, components, regions, layers and/or portions should not be limited by these terms. These terms are used to distinguish one element, component, region, layer or portion from another element, component, region, layer or portion. Therefore, a first element, component, region, layer or portion discussed below may be referred to as a second element, component, region, layer or portion without departing from the teaching of the exemplary embodiments.

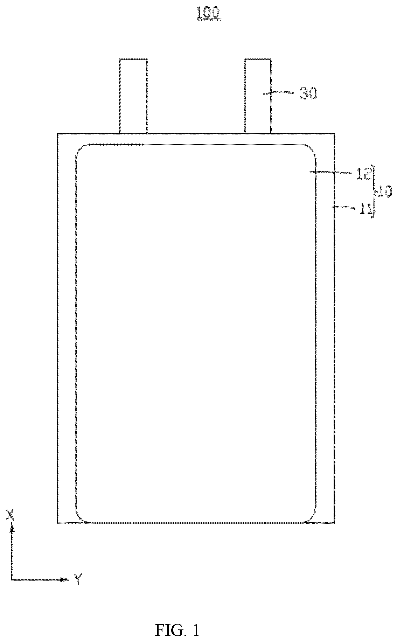

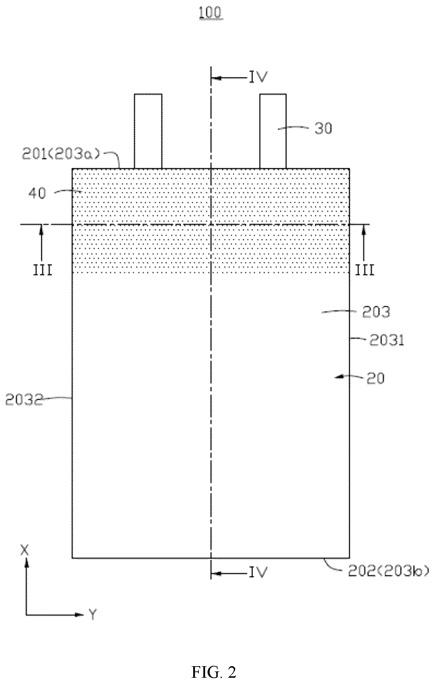

Referring to FIG. 1 and FIG. 2, one embodiment of this application provides a secondary battery 100, including a housing 10, an electrode assembly 20, electrolyte and tabs 30. The electrode assembly 20 and the electrolyte are accommodated in the housing 10. The tabs 30 are connected to the electrode assembly 20 and protrude out of one side of the housing 10 in a first direction X to be connected to an external element. In this embodiment, two tabs 30 are provided, namely a positive electrode tab and a negative electrode tab; and the two tabs 30 are located on the same side of the secondary battery 100.

The housing 10 may be a packaging bag packaged by a packaging film (such as aluminum-plastic film or steel-plastic film), that is, the secondary battery 100 is a pouch battery. Specifically, the housing 10 includes a main body portion 11 and a packaging portion 12, where the main body portion 11 is provided with an accommodating cavity for accommodating an electrode assembly 20, and the packaging portion 12 extends from an edge of the main body portion 11 and is configured to seal the main body portion 11. The tabs 30 pass through the packaging portion 12 to extend in the first direction X. In other embodiments, the housing 10 is a metal housing, for example, a steel housing or an aluminum housing.

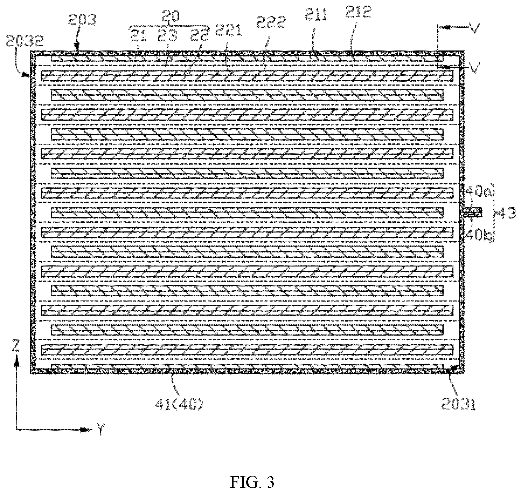

Referring to FIG. 3, the electrode assembly 20 includes a first electrode plate 21, a second electrode plate 22, and a separator film 23 arranged between the first electrode plate 21 and the second electrode plate 22. The first electrode plate 21, the separator film 23 and the second electrode plate 22 are alternately stacked in a second direction Z perpendicular to the first direction X to form a stacked structure. In other embodiments, the first electrode plate 21, the separator film 23 and the second electrode plate 22 are stacked and wound to form a winding structure.

The first electrode plate 21 includes a first current collector 211 and a first active substance layer 212 arranged on at least one surface of the first current collector 211. The second electrode plate 22 includes a second current collector 221 and a second active substance layer 222 arranged on at least one surface of the second current collector 221. In this embodiment, the first electrode plate 21 is a positive electrode plate, and the second electrode plate 22 is a negative electrode plate. The first current collector 211 and the second current collector 212 each include at least one of Ni, Ti, Cu, Ag, Au, Pt, Fe, Al and compositions thereof. The first active substance layer 212 includes a positive electrode active substance. The positive electrode active substance may include at least one of lithium cobaltate, lithium manganate, lithium nickelate, lithium nickel cobalt manganate, lithium iron phosphate, lithium ferromanganese phosphate, lithium vanadium phosphate, lithium vanadoxy phosphate, a lithium-manganese-enriched material, lithium nickel cobalt aluminate and compositions thereof. the second active substance layer 222 includes a negative electrode active substance. The negative active substance may be selected from at least one of a graphite material, an alloy material, lithium metal and alloy thereof. The graphite material may be selected from at least one of artificial graphite and natural graphite. The alloy material may be selected from at least one of silicon, silicon oxide, stannum and titanium sulfide.

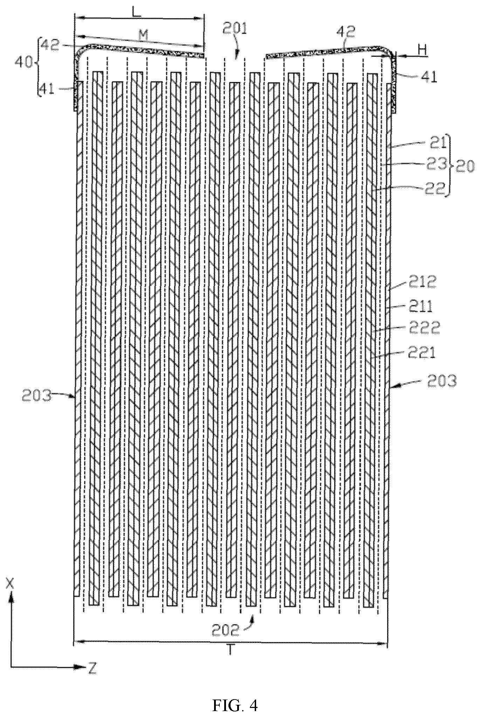

Referring to FIG. 2 and FIG. 4, the electrode assembly 20 further includes a first end face 201 and a second end face 202 which are opposite to each other in a first direction X, and a side surface 203 surrounding the periphery of the first end face 201 and connected between the first end face 201 and the second end face 202. The first end surface 201 includes an end face of one side of each of a first electrode plate 21, a second electrode plate 22 and a separator film 23 in the first direction X. The second end surface 202 includes an end face of the other side of each of the first end surface 21, the second end surface 22 and the separator film 23 in the first direction X. The tabs 30 protrude from the first end face 201 in the first direction X.

Referring to FIG. 2 to FIG. 4, the secondary battery 100 further includes a first thin film 40. The first thin film 40 surrounds the electrode assembly 20 and is configured to fasten the electrode assembly 20, thereby reducing the risk of contact short circuit of the first electrode plate 21 and the second electrode plate 22 due to the contraction of the separator film 23. Specifically, the first thin film 40 includes a first main body portion 41 and a first extending portion 42 which are connected. The first thin film 41 surrounds the side surface 203 and is configured to fasten the electrode assembly 20, thereby reducing the risk of contact short circuit of the first electrode plate 21 and the second electrode plate 22 due to the contraction of the whole separator film 23 caused by an insufficient binding force of the whole electrode assembly 20. In the first direction X, the side surface 203 includes a first edge 203a of one side where the tabs 30 are located, and a second edge 203b of a side opposite to one side where the tabs 30 are located. The first main body portion 41 extends from the first edge 203a to the second edge 203b, and is arranged away from the second edge 203b. The first extending portion 42 is bent and extends from an edge of the first extending portion 41 on one side where the tabs 30 are located, and covers at least part of the first end face 201. The first extending portion 42 covers part of the first end face 201 so as to block the electrolyte impact on the first end face 201, thereby reducing the risk of contact short circuit of the first electrode plate 21 and the second electrode plate 22 due to the contraction of the separator film 23 exposed on the first end face 201 caused by the impact of the electrolyte.

In the first direction X, the orthographic projection of the first extending portion 42 on the first end face 201 is located in the first end face 201. Specifically, in the first direction X, the orthographic projection area of the first extending portion 42 on the first end face 201 is S1 mm², and the orthographic projection area of the first end face 201 is S2 mm², 0<S1<S2. Preferably, 20%≤S1/S2<100%, the influence on the volume energy density can be reduced while the risk of contact short circuit of the first electrode plate 21 and the second electrode plate 22 due to the contraction of the separator film 23 exposed on the first end face 201 caused by the impact of the electrolyte can be reduced.

Referring to FIG. 4, in the second direction Z, the thickness of the electrode assembly 20 is T mm, and the length of the first extending portion 42 is L mm. In some embodiments of this application, 0<L≤0.5T+2. Preferably, the length of the first extending portion 42 is greater than 2 mm, that is, 2≤L≤0.5T+2. In some embodiments, the first extending portion 42 is perpendicular to the first main body portion 41, and the distance M from an edge of the first extending portion 42 close to the first main body portion 41 to an edge of the first extending portion away from the first main body portion 41 is equal to the length L of the first extending portion 42 in the second direction Z. In some other embodiments, an included angle between the first extending portion 42 and the first main body portion 41 is an obtuse angle or an acute angle, and the distance M from the edge of the first extending portion 42 close to the first main body portion 41 to the edge of the first extending portion away from the first main body portion 41 is greater than the length L of the first extending portion 42 in the second direction Z. When L is in the above range, the risk of the first extending portion 42 entering the packaging portion 12 during packaging of the packaging bag can be reduced, thereby reducing the influence on the sealing property of the housing 10 and also reducing the influence on the energy density caused by excessive L.

In some embodiments, the elongation at break of the first thin film 40 is greater than or equal to 1%. In this application, the elongation at break of the first thin film 40 is measured by the following method: one section of a thin film was taken as a test sample, the test sample was straightened without obvious wrinkles, and at this time, the length of the test sample was measured as an initial length; the sample was put into a mechanical apparatus capable of stretching the sample, the sample was stretched at a constant speed of 0.5 mm/min, and when the sample was broken, the stretched length was ΔL, and the elongation at break ε=(ΔL/L)×100%. When the elongation at break of the first thin film 40 is in the above range, the first thin film 40 may be arranged on the surface of the electrode assembly 20 in a stretching manner, thereby simplifying the processing process.

In some embodiments, the gas permeability of the first thin film 40 is less than 10000s/100cc. That is, the time of a gas of 100cc penetrating through the first thin film 40 is 10000 seconds. When the gas permeability of the first thin film 40 is in the above range, the impact of the electrolyte can be blocked without affecting the infiltration effect of the electrolyte.

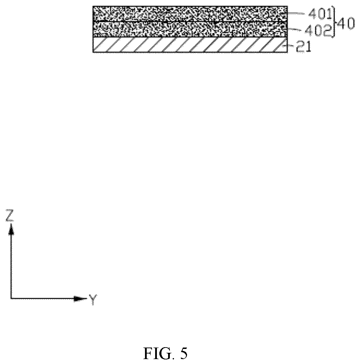

Referring to FIG. 5, the first thin film 40 includes a substrate layer 401. The substrate layer 401 includes a polymer film, a multi-layer polymer film or a nonwoven fabric formed by a polymer; and the polymer includes at least one of polyolefin, polyvinylidene fluoride, polyethylene terephthalate, cellulose, polyimide, polyamide, spandex or polyphenylenediamine.

Referring to FIG 5, in some embodiments, the first thin film 40 further includes a bonding layer 402 arranged on a surface of the substrate layer 401, and the bonding layer 402 is bonded with the electrode assembly 20. The bonding layer 402 may include at least one of polyethylene, polypropylene, phenolic resin, melamine resin, unsaturated polyester resin, epoxy resin, organic silicon resin or polyurethane.

The thickness of the first thin film 40 is H. FIG. 4 shows the thickness H of the first main body portion 41 in the second direction Z. In some embodiments, 0<H≤50µm, for example, H is 1 µm, 2 µm, 5 µm, 8 µm, 10 µm, 15 µm, 20 µm, 30 µm, 40 µm and 50 µm. When the thickness of the first thin film 40 is in the above range, the influence of the first thin film on the volume energy density can be reduced. Preferably, 4µm<H≤10µm, thereby reducing the influence on the volume energy density can be reduced, and an appropriate strength can be maintained.

Referring to FIG. 4, the side surface 203 includes a first side surface 2031 and a second side surface 2032 which are opposite to each other in a third direction Y perpendicular to the first direction X and the second direction Z. The first side surface 2031 includes an end face of one side of each of a first electrode plate 21, a second electrode plate 22 and a separator film 23 in a third direction Y. The second side surface 2032 includes an end face of the other side of each of the first end surface 21, the second end surface 22 and the separator film 23 in the third direction Y. In other embodiments, in a case that the electrode assembly 20 has a winding structure, the first side surface 2031 includes side surfaces of the first electrode plate 21 (the second electrode plate 22) and/or the separator film 23 located on an outermost layer of one side of the third direction Y; and the second side surface 2032 includes side surfaces of the first electrode plate 21 (the second electrode plate 22) and/or the separator film 23 located on an outermost layer of the other side of the third direction Y. The first thin film 40 further includes a start end 40a and a tail end 40b which protrude from the first side surface 2031 or the second side surface 2032, and the start end 40a and the tail end 40b are overlapped and bonded to form a composite portion 43. In this embodiment, the start end 40a and the tail end 40b protrude from the first side surface 2031, that is, the composite portion 43 is arranged on the first side surface 2031. In other embodiments, the composite portion 43 is arranged on the second side surface 2032. The composite portion 43 is arranged on the first side surface 2031 or the second side surface 2032, so that when the thin film is stretched, part of the thin film is naturally bent on the first end face 201, thereby simplifying the processing process. In other embodiments the start end 40a and the tail end 40b protrude from one of two opposite side surfaces in the second direction Z. The start end 40a and the tail end 40b may be heated, softened and molten for butt fusion to form the composite portion 43. In other embodiments, the start end 40a and the tail end 40b are bonded through adhesion to form the composite portion 43.

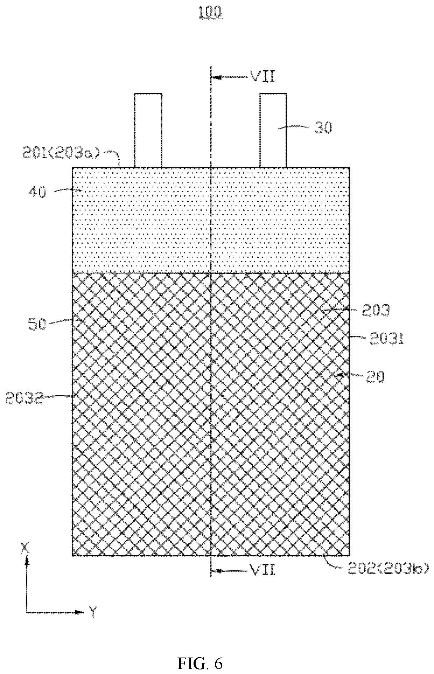

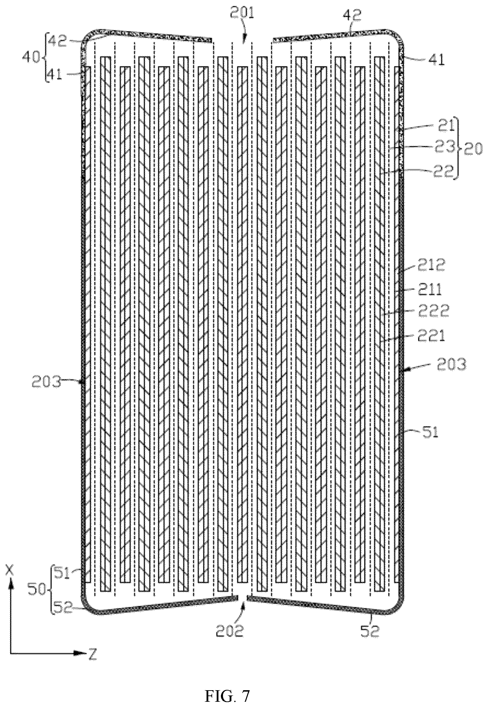

Referring to FIG. 6 and FIG. 7, in another embodiment, the secondary battery 100 further includes a second thin film 50. The second thin film 50 includes a second main body portion 51 and a second extending portion 52 which are connected. The second main body portion 51 surrounds the side surface 203 and is configured to fasten the electrode assembly 20. The second extending portion 52 is bent and extends from an edge of the second main body portion 51 on one side where the second end face 202 is located, and covers at least part of the second end face 202, so that the electrolyte impacted on the second end face 202 can be blocked, thereby reducing the risk of contact short circuit of the first electrode plate 21 and the second electrode plate 22 due to the contraction of the separator film 23 exposed on the first end face 202 caused by the impact of the electrolyte.

In the first direction X, the orthographic projection of the second extending portion 52 on the second end face 202 is located in the second end face 202. In the first direction X, the orthographic projection area of the second extending portion 52 on the second end face 202 is less than or equal to the orthographic projection area of the second end face 202. Preferably, the ratio of the orthographic projection area of the second extending portion 52 on the second end face 202 to the orthographic projection area of the second end face 202 is 20%-100%.

The second thin film 50 may be a polymer film, a multi-layer polymer film or a nonwoven fabric formed by a polymer; and the polymer includes at least one of polyolefin, polyvinylidene fluoride, polyethylene terephthalate, cellulose, polyimide, polyamide, spandex or polyphenylenediamine. The second thin film 50 may also be bonded with the electrode assembly 20 through a bonding layer.

In the first direction X, the first main body portion 41 and the second main body portion 51 may be connected or separated. In this embodiment, the first main body portion 41 and the second main body portion 51 are connected, and the first thin film 40 and the second thin film 50 are integrally formed. In a case that the electrode assembly 20 has a stacked structure, the first thin film 40 and the second thin film 50 which are integrally formed can block the impact of the electrolyte on end portions of the electrode assembly 20 in the first direction X and the third direction Y, thereby reducing the risk of the contraction of any end portion of the separator film 23 caused by the impact of the electrolyte.

An embodiment of this application provides a manufacturing method for a secondary battery, includes the following steps:
Step S1: an electrode assembly was prepared, where the electrode assembly includes a first end face and a side surface surrounding the periphery of the first end face.

The electrode assembly includes a first electrode plate, a second electrode plate, and a separator film arranged between the first electrode plate and the second electrode plate. The first electrode plate, the separator film and the second electrode plate are alternately stacked into a stacked structure, or are stacked and wound into a winding structure.

Step S2: the electrode assembly and tabs were connected, where the tabs protrude from the first end face in a first direction.

Step S3: the electrode assembly was placed on the first thin film. In a third direction perpendicular to the first direction, the first thin film includes a start end and a tail end which are arranged oppositely. In the first direction, the first thin film includes a first main body portion and a first extending portion connected to the first main body portion. The electrode assembly covers the first main body portion, the first extending portion is exposed outside the electrode assembly, and the first extending portion and the tabs are located on the same side of the electrode assembly. In this step, the first thin film is substantially sheet-shaped.

Step S4: the first thin film was bent, so that the first main body portion surrounded the side surface, and the start end and the tail end were located on the same side of the electrode assembly in the third direction.

Step S5: the first thin film was stretched in the third direction, so that the first extending portion was bent toward the first end face and covered a part of the first end face. During stretching in the third direction, the first main body portion surrounding the electrode assembly was blocked by the electrode assembly and stretched; the first extending portion exposed outside the electrode assembly was not blocked by the first main body portion and not stretched; and the first extending portion was naturally bent to the first end face along with the stretched first main body portion.

Step S6: the start end and the tail end were connected, so that the first main body portion fastened the electrode assembly. The start end and the tail end have overlapping portions in the second direction, and the overlapping portions are connected to form a composite portion.

Step S7: the electrode assembly was placed in the housing, and electrolyte was injected into the housing.

Another embodiment of this application further provides a manufacturing method for a secondary battery, includes the following steps:
Step S10: an electrode assembly was prepared, where the electrode assembly includes a first end face and a side surface surrounding the periphery of the first end face.

The electrode assembly includes a first electrode plate, a second electrode plate, and a separator film arranged between the first electrode plate and the second electrode plate. The first electrode plate, the separator film and the second electrode plate are alternately stacked into a stacked structure, or are stacked and wound into a winding structure.

Step S20: the electrode assembly and tabs were connected, where the tabs protrude from the first end face in a first direction.

Step S30: a first thin film was sleeved on the electrode assembly, where the first thin film includes a first main body portion and a first extending portion connected to the first main body portion, the first main body portion surrounds the side surface, the first extending portion is exposed outside the electrode assembly, and the first extending portion and the tabs are located on the same side of the electrode assembly. In this step, the first thin film is substantially cylindrical.

Step S40: the first thin film was heated, so that the first extending portion was contracted to cover a part of the first end face.

Step S50: the electrode assembly was placed in the housing, and electrolyte was injected into the housing.

In the manufacturing method for the secondary battery, the first thin film is arranged on the surface of the electrode assembly through the stretching or thermal contraction performance of the thin film, so that the processing process is simplified.

An embodiment of this application further provides an electronic apparatus, including any of the above secondary batteries. The electronic apparatus provided by this application may be, but not limited to, a notebook computer, a pen input computer, a mobile computer, an e-book player, a portable phone, a portable fax machine, a portable copying machine, a portable printer, a stereo headset, a video cassette recorder, a liquid crystal television, a handheld cleaner, a portable CD machine, a mini disk, a transceiver, an electronic notebook, a calculator, a memory card, a portable recorder, a radio, a backup power supply, a motor, an automobile, a motorcycle, a power-assisted bicycle, a luminaire, a toy, a game machine, a clock, an electric tool, a flashlight, a camera, a large battery for household use, a lithium ion capacitor and the like.

The performance of the secondary battery provided by this application is described below through specific embodiments and comparative examples.

### Embodiment 1

An electrode assembly 20 provided with a first thin film 40 shown in FIG. 4 was input into a housing, and liquid injection, packaging and formation were performed to obtain a finished product battery. The thickness T of the electrode assembly 20 is 6 mm, the length L of the first extending portion 42 is 0.1 mm, and the ratio S1/S2 of the orthographic projection area S1 of the first extending portion 42 on the first end surface 201 in the first direction X to the orthographic projection area S2 of the first end first end face 201 in the first direction X is 3.33%.

### Embodiments 2-15 and Comparative Example 1

Different from Embodiment 1, the length L of the first extending portion 42 and the orthographic projection area ratio S1/S2 are different.

The batteries in each embodiment and the comparative example were subjected to a drop test. The test parameters and the test results of each embodiment and the comparative example are shown in Table 1.

A drop failure rate test method:
a lithium ion battery was pretreated at 25°C, standing was performed in a normal temperature environment for 60 minutes, and the volume of the lithium ion battery was tested before the drop test. The lithium ion battery was put into a clamp, and a drop device was used for free drop from a position with 1.5 m above the ground: head-tail-head right corner-head left corner-tail left corner (the angle: 45±15°), which was repeated for 6 rounds. The voltage of the lithium ion battery was measured and recorded at the end of the drop, and the appearance of the lithium ion battery was checked and photos were taken before and after the test. The drop test passed the determination standards: no smoke, no liquid leakage, and a voltage drop less than 30 mV. A voltage drop test method is to test the voltage of the battery by an internal resistance meter respectively before and after the drop, and the voltage drop is the difference value therebetween.

**Table 1**

| Item | L (mm) | 0.5T+2 (mm) | S1/S2 | Failure number/total number of drop test |
|---|---|---|---|---|
| Embodiment 1 | 0.1 | 5 | 3.33% | 6/10 |
| Embodiment 2 | 0.5 | 5 | 16.67% | 5/10 |
| Embodiment 3 | 1 | 5 | 33.33% | 1/10 |
| Embodiment 4 | 2 | 5 | 66.67% | 0/10 |
| Embodiment 5 | 4 | 5 | 99.6% | 0/10 |
| Embodiment 6 | 5 | 5 | 99.6% | 0/10 |
| Embodiment 7 | 0.03 | 5 | 1% | 6/10 |
| Embodiment 8 | 0.15 | 5 | 5% | 6/10 |
| Embodiment 9 | 0.45 | 5 | 15% | 5/10 |
| Embodiment 10 | 0.6 | 5 | 20% | 3/10 |
| Embodiment 11 | 0.9 | 5 | 30% | 2/10 |
| Embodiment 12 | 1.2 | 5 | 40% | 2/10 |
| Embodiment 13 | 1.8 | 5 | 60% | 0/10 |
| Embodiment 14 | 2.4 | 5 | 80% | 0/10 |
| Embodiment 15 | 3 | 5 | 95% | 0/10 |
| Comparative Example 1 | 0 | 5 | 0 | 9/10 |

| | | | | |
|---|---|---|---|---|
| Note: X/10 indicates the voltage drop failure number of the tested ten samples is X. | | | | |

It can be seen from Table 1 that when 0<L≤0.5T+2 and 0<S1<S2 are met, the drop failure probability is small, because the first extending portion of the first thin film blocks the electrolyte impacted on the first end face, thereby reducing the risk of contact of the positive electrode plate caused by the contraction of the separator film due to the impact of the electrolyte. When 20%≤S1/S2<100%, the drop failure rate is less than or equal to 3/10, and the effect is better. Further, when 20%≤S1/S2≤80%, good safety performance can be achieved, and the interference of the separator film on other assemblies can be improved. When 2≤L≤0.5T+2, the voltage drop failure rate is 0/10, and the effect is better.

What is disclosed above is merely preferred embodiments of this application, and certainly is not intended to limit the scope of the claims of this application. Therefore, equivalent variations made in accordance with the claims of this application still fall within the scope of this application.

## Claims

1. A secondary battery (100), comprising: a housing (10), an electrode assembly (20), an electrolyte, and tabs (30) connected to the electrode assembly (20); the electrode assembly (20) and the electrolyte are accommodated in the housing (10); the electrode assembly (20) comprises a first end face (201) and a side surface (203) surrounding the periphery of the first end face (201); the tabs (30) protrude out from the first end face (201) in a first direction;
**characterized in that**, the secondary battery further comprising a first thin film (40), the first thin film (40) comprising a first main body portion (41) and a first extending portion (42) connected to each other, the first main body portion (41) surrounding the side surface (203), and the first extending portion (42) covering at least a part of the first end face (201).

2. The secondary battery (100) according to claim 1, **characterized in that**, in a second direction perpendicular to the first direction, a thickness of the electrode assembly (20) is T mm, and a length of the first extending portion (42) is L mm, wherein 0<L≤0.5T+2.

3. The secondary battery (100) according to claim 2, **characterized in that**, 2≤L≤0.5T+2.

4. The secondary battery (100) according to any one of claims 1-3, **characterized in that**, the first thin film (40) satisfies at least one of the following conditions:
(1) an elongation at break of the first thin film (40) is greater than or equal to 1%; or
(2) a gas permeability of the first thin film (40) is less than 10000s/100cc.

5. The secondary battery (100) according to any one of claims 1-4, **characterized in that**, the first thin film (40) comprises a substrate layer (401) comprising a polymer film, a multi-layer polymer film or a nonwoven fabric formed by a polymer; the polymer comprising at least one of polyolefin, polyvinylidene fluoride, polyethylene terephthalate, cellulose, polyimide, polyamide, spandex or polyphenylenediamine.

6. The secondary battery (100) according to claim 5, **characterized in that**, the first thin film (40) further comprises a bonding layer (402) arranged on a surface of the substrate layer (401), the bonding layer (402) being bonded with the electrode assembly (20).

7. The secondary battery (100) according to claim 1, **characterized in that**, a thickness of the first thin film (40) is H, 0<H≤50µm.

8. The secondary battery (100) according to claim 7, **characterized in that**, 4µm≤H≤10µm.

9. The secondary battery (100) according to claim 1, **characterized in that**, the side surface (203) comprises a first side surface (2031) and a second side surface (2032) disposed opposite to each other in a third direction, the third direction is perpendicular to the first direction; and the first thin film (40) comprises a start end (40a) and a tail end (40b) ; the start end (40a) and the tail end (40b) protrude from the first side surface (2031) or the second side surface (2032), the start end (40a) and the tail end (40b) being overlapped and bonded to form a composite portion (43).

10. The secondary battery (100) according to claim 1, **characterized in that**, the electrode assembly (20) further comprises a second end face (202) opposite to the first end face (201) in the first direction; and the secondary battery (100) further comprises a second thin film (50), the second thin film (50) comprising a second main body portion (51) and a second extending portion (52) connected to each other, the second main body portion (51) surrounding the side surface (203), and the second extending portion (52) covering at least a part of the second end face (202).

11. The secondary battery (100) according to claim 10, **characterized in that**, the first main body portion (41) and the second main body portion (51) are connected in the first direction.

12. The secondary battery (100) according to claim 11, **characterized in that**, the electrode assembly (20) is of a stacked structure.

13. The secondary battery (100) according to claim 1, **characterized in that**, in the first direction, an orthographic projection area of the first extending portion (42) on the first end face (201) is S1 mm², and an area of the first end face (201) is S2 mm², 0<S1 <S2.

14. The secondary battery (100) according to claim 13, **characterized in that**, 20%≤S1/S2 < 100%.

15. The secondary battery (100) according to claim 14, **characterized in that**, 20%≤S1/S2≤80%.

16. A method for manufacturing the secondary battery (100) as claimed in any one of claims 1-15, **characterized in that**, the method comprises the following steps:
preparing the electrode assembly (20);
connecting the electrode assembly (20) and the tabs (30), the tabs (30) protruding from the first end face (201) in the first direction;
placing the electrode assembly (20) on the first thin film (40), in the first direction; and in a third direction perpendicular to the first direction, the first thin film (40) comprising a start end (40a) and a tail end (40b) arranged opposite to each other;
bending the first thin film (40), so that the first main body portion (41) surrounds the side surface (203), and the start end (40a) and the tail end (40b) are located on the same side of the electrode assembly (20) in the third direction;
stretching the first thin film (40) in the third direction, so that the first extending portion (42) is bent toward the first end face (201) and covers a part of the first end face (201);
connecting the start end (40a) and the tail end (40b), so that the first main body portion (41) fastens the electrode assembly (20); and
placing the electrode assembly (20) in a housing (10), and injecting the electrolyte in the housing (10).

17. A method for manufacturing the secondary battery (100) as claimed in claims 1-15, **characterized in that**, the method comprises the following steps:
preparing the electrode assembly (20);
connecting the electrode assembly (20) and the tabs (30), the tabs (30) protruding from the first end face (201) in the first direction;
sleeving the first thin film (40) on the electrode assembly (20);
heating the first thin film (40), so that the first extending portion (42) is contracted to cover a part of the first end face (201); and
placing the electrode assembly (20) in a housing (10), and injecting the electrolyte in the housing (10).

18. An electronic apparatus, **characterized by** comprising the secondary battery (100) according to any one of claims 1 to 15, or a secondary battery (100) prepared by the manufacturing method for a secondary battery (100) according to any one of claims 16 to 17.
